# EUROPEAN PATENT SPECIFICATION

(11) **EP 2 245 594 B1**
(45) Date of publication and mention of the grant of the patent: **15.06.2011**
(21) Application number: 09701605.9
(22) Date of filing: 12.01.2009
(51) Int. Cl.: G06T 7/40, G06F 17/30, H04N 5/14

(54) **FLASH DETECTION**
FLASH-ERKENNUNG
DÉTECTION DE FLASH

(30) Priority: 17.01.2008 EP 08150348
(43) Date of publication of application: 03.11.2010
(73) Proprietor: Koninklijke Philips Electronics N.V., 5621 BA Eindhoven (NL)
(72) Inventor: PETERS, Marc, A., NL-5656 AE Eindhoven (NL)
(74) Representative: Coops, Peter
(86) International application number: PCT/IB2009/050099
(87) International publication number: WO 2009/090586

(56) References cited:
- US-A1- 2007 025 615
- ZHANG ET AL.: "A New Shot Boundary Detection Algorithm" ADVANCES IN MULTIMEDIA INFORMATION PROCESSING, PCM 2001, LNCS 2195, vol. 2195/2001, 1 January 2001 (2001-01-01), pages 63-70, XP002528778 ISBN: 978-3-540-42680-6
- XUEMING QIAN ET AL: "Effective Fades and Flashlight Detection Based on Accumulating Histogram Difference" IEEE TRANSACTIONS ON CIRCUITS AND SYSTEMS FOR VIDEO TECHNOLOGY, IEEE SERVICE CENTER, PISCATAWAY, NJ, US, vol. 16, no. 10, 1 October 2006 (2006-10-01), pages 1245-1258, XP011149963 ISSN: 1051-8215
- FINLAYSON G D ET AL: "Illuminant estimation for object recognition" COLOR RESEARCH & APPLICATION WILEY USA, vol. 27, no. 4, August 2002 (2002-08), pages 260-270, XP002528779 ISSN: 0361-2317
- GEORGE V LANDON ET AL: "Towards Automatic Photometric Correction of Casually Illuminated Documents" COMPUTER VISION AND PATTERN RECOGNITION, 2007. CVPR '07. IEEE CONFERENCE ON, IEEE, PISCATAWAY, NJ, USA, 1 June 2007 (2007-06-01), pages 1-8, XP031114511 ISBN: 978-1-4244-1179-5
- GAO L ET AL: "PCA-based approach for video scene change detection on compressed video" ELECTRONICS LETTERS, IEE STEVENAGE, GB, vol. 42, no. 24, 23 November 2006 (2006-11-23), pages 1389-1390, XP006027699 ISSN: 0013-5194
- ZHOU Q ET AL: "Object tracking in an outdoor environment using fusion of features and cameras" IMAGE AND VISION COMPUTING, GUILDFORD, GB, vol. 24, no. 11, 1 November 2006 (2006-11-01), pages 1244-1255, XP025135412 ISSN: 0262-8856 [retrieved on 2006-11-01]

## Description

### FIELD OF THE INVENTION

This invention relates to a method and system for processing a signal. The processing provides flash detection and the output can be used to improve content analysis algorithms.

### BACKGROUND OF THE INVENTION

It is common for people to watch television and engage in other activities that include visual content such as watching DVDs. The user experience with respect to watching such video content will change in the future. The first signs are already visible, for example in the television products of Philips, in which lamps are added to enhance the experience of watching television. This process of adding further devices and additional functionality to augment an entertainment experience such as watching a film is growing. The venture "amBX" (see for example, www.ambx.com) is preparing the next steps to enhance an experience such as watching television even further, by playing scripts, along with the original audio/visual content, containing effect descriptions that could be offered to the user using a suitable augmentation system. Additional devices in the user's entertainment space provide augmentation to the video content.

For example, United States of America Patent Application Publication US2002169817 discloses a real-world representation system which comprises a set of devices, each device being arranged to provide one or more real-world parameters, for example audio and visual characteristics. At least one of the devices is arranged to receive a real-world description in the form of an instruction set of a markup language and the devices are operated according to the description. General terms expressed in the language are interpreted by either a local server or a distributed browser to operate the devices to render the real-world experience to the user. In this way a script is delivered that is used to control other devices alongside the television delivering the original content.

It is necessary however, to author the scripts that will be used to create the additional effects in the additional devices. To assist the authoring process, many applications use content analysis to automate the processes that would otherwise have to be carried out manually. In relation to content creation, for example amBX scripting, well-trained authors go through a movie frame by frame and choose specific frames where they want to start/stop the display of a light. This light has a color that they adapt to something (background, explosion, object) in the video sequence.

To create an amBX script for a movie, lots of time is spent on accurately determining time positions in the video and matching colors that are used to create light effects at specific time instances. Content analysis can offer great benefits for the scripting authors. For example, shot cuts can automatically be detected giving the author positions in time where the light might be changed. Also dominant colors can be extracted for each frame in a shot or a selection of sampled frames, from which a set of colors can be proposed that would match the colors in the specific shot or time interval. An example of the latter could be using the MPEG 7 dominant color descriptor, which gives up to eight colors for a frame. To determine the average of such (MPEG 7 dominant color) descriptor one could use the method as proposed in WO2008/047280, Dominant color descriptors, Marc A. Peters, Pedro M.F.S. Fonseca. Other methods for choosing colors can be used as well of course, for example histograms.

It is known that flashes of light in a video sequence can influence the results of any content analysis process. The appearance of a flash of light can create false shot cuts, and it can influence very strongly the colors of the specific frames where the flashes occur, giving incorrect results of any color analysis, for which colors are relevant. Especially in relation to specific types of content, for example action movies with lots of explosions, or movies with lots of flickering lights, the results of a content analysis process can be far from what the scripting author desires. Shot cuts will be generated by analysis algorithms that actually correspond to flashes in the video content.

To address this known problem, United States of America Patent 5642294 describes a shot cut detection method based on comparing frame-to-frame intensity differences. This document describes a system that is stated to preclude the possibility of false detection of flashlight in video as a cut. Assuming that an image data sequence containing flashlight is composed of images A, B, *, D, E,... and that the image * is brighter than the other images A, B, D and E because of flashlight, the distance d(A,B) between the images A and B is small, but since the intensity level of the image * is higher than those of the images B and D, the distances d(B,*) and d(*,D) take large values. Some of the conventional methods decide the cut point in dependence on whether the distance d(B,*) is larger than a certain threshold value, and hence have the disadvantage of erroneously detecting flashlight as the cut point. The distance d(B,*) is large at the cut point as well, but it is a characteristic feature of flashlight that the distance d(*,D) takes a large value; the utilization of this property will permit discrimination between the cut point and flashlight, and hence will prevent misrecognition of the cut point.

However, there are several drawbacks to this methodology. Firstly, a flash does not necessarily take only a single frame to appear, in many cases it takes two or three frames to gradually increase (or decrease) to/from the light source. The changes in intensity from frame-to-frame separately are not necessarily significantly large. Secondly, when the question of motion between frames is considered, the principle of this document, as described above, does not work anymore. This is because after a flash the frame is treated as having returned to the state as it was before the flash. However with some significant motion this will not be the case. Indeed this will become more of a problem when considering that the flash could last longer than one frame, since the cumulative motion will a larger impact. Thirdly, flash detection in this document is based on the concept that the frame with a flash is a frame which is brighter. This is definitely not always true. For example, simply take a beautiful white background and flash a dark blue light on it. The image frame will not become brighter, yet there has occurred a flash.

Similarly, United States of America Patent 6014183 relates to a device which monitors a digitized video data stream and detects when scene changes occur in the video stream. The device detects scene changes by comparing from frame-to-frame each of the pixel colors within the frame. When a high degree of change in pixel color from one frame to the next is detected, this is identified as a scene change.

The device is configured so that the crossing of a sensitivity boundary by composite color data will not necessarily result in a scene change being detected by the software program. A threshold command may be used to examine a predetermined number of frames following the frame which exceeded the sensitivity limits. For example, after the color data exceeds one of the sensitivity boundaries (a potential scene change), a scene detection program may compare the next ten frames to the initial frame (the frame prior to the frame which crossed the sensitivity boundary) in order to determine if the scene has really changed. If most of the frames within the threshold window do not exceed the sensitivity boundary when compared to this initial frame, then there has likely not been a scene change and an isolated event in the video data stream caused the composite color value data to exceed the sensitivity limit momentarily (e.g. a flashbulb went off in the video, but the scene did not change). The main problem with this technique of comparing colors is that after a few frames some motion can change the colors drastically, and any isolated event within the frames examined will not be detected as such.

The article "A New Shot Boundary Detection Algorithm" by D. Zhang et al., PCM 2001, LNCS2195, pp.63-70, 2001, presents an algorithm for automatic shot detection which uses a "flash model" based on the temporal behavior of average intensity valves across a frame sequence in a local window. When a flashlight occurs, average frame intensity changes from one level to another, and then falls back to the original level.

### SUMMARY OF THE INVENTION

It is therefore an object of the invention to improve upon the known art. According to a first aspect of the present invention, there is provided a method of processing an image signal comprising: receiving an image signal comprising a series of frames, performing light source color detection on each frame, and detecting a flash at frame n of length m frames when the following criteria are satisfied: the difference between the detected light source color in frame n-1 and frame n is above a first predetermined threshold, the difference between the detected light source color in frame n+m-1 and frame n+m is above the first predetermined threshold, and the difference between the detected light source color in frame n-1 and frame n+m is below a second predetermined threshold.

According to a second aspect of the present invention, there is provided a system for processing an image signal comprising: a receiver arranged to receive an image signal comprising a series of frames, and a processor arranged to perform light source color detection on each frame, and to detect a flash at frame n of length m frames when the following criteria are satisfied: the difference between the detected light source color in frame n-1 and frame n is above a first predetermined threshold, the difference between the detected light source color in frame n+m-1 and frame n+m is above the first predetermined threshold, and the difference between the detected light source color in frame n-1 and frame n+m is below a second predetermined threshold.

According to a third aspect of the present invention, there is provided a computer program product on a computer readable medium for processing an image signal, the product comprising instructions for: receiving an image signal comprising a series of frames, performing light source color detection on each frame, and detecting a flash at frame n of length m frames when the following criteria are satisfied: the difference between the detected light source color in frame n-1 and frame n is above a first predetermined threshold, the difference between the detected light source color in frame n+m-1 and frame n+m is above the predetermined threshold, and the difference between the detected light source color in frame n-1 and frame n+m is below a second predetermined threshold.

Owing to the invention, it is possible to detect flashes in a video sequence accurately and efficiently, with a robust method that is not affected by movement within the frames processed, nor by changes of color due to motion of objects, within the frames processed. Flashes in video content can influence the results for many applications. As discussed above, a flash can yield an incorrect shot cut. Also the (average) colors of a shot or scene can be changed because of the results of a flash. Such changes are often undesirable. Moreover, the proposal also detects the kind of flash, i.e. its color and its intensity. This information is very useful for applications such as determining the colors in a shot, or the colors of a flash. Such information is very important for example for amBX scripting authors.

Advantageously, the detected light source color of a frame comprises a point in color space. Determining the light source color within a frame can be carried out using an algorithm such as principal component analysis (PCA), which provides a light source color estimation of the pixels within a frame as a vector. The output of this algorithm can be configured as a 3-dimensional vector in color space which can then be used to calculate a point in the color space, which is then used in a comparative process when deciding on the change in light source color between two frames. The detected light source color is a point on the principal component vector of the pixels within the frame.

Preferably, the method further comprises maintaining a look-up table of frames n, where the difference between the detected light source color in frame n-1 and frame n is above the first predetermined threshold. This greatly simplifies the detection of the flashes in a sequence of frames. Each time a large change in the light source color between two consecutive frames is detected (above the first threshold) then that frame n is stored in the look-up table as a frame number. This means that whenever a further large change in the light source color between two consecutive frames is detected, then this can be compared back with the earlier frames stored in the look-up table to see if any were the beginning of the flash. Flashes can only be detected when they have ended, looking backwards to find the start of the flash.

Ideally, the method further comprises suppressing the detection of the flash, if the value m, the length in frames of the detected flash, is above a predetermined number. To avoid the detection of false flashes, a limit is placed on the maximum permissible gap (in frames) between the start and end of the flash. The predetermined number may be five, for example. This means that if a flash is detected at frame n with a length m of eight frames, then this flash is discarded as a false result. The detection of the flash is thereby suppressed in relation to this set of data.

### BRIEF DESCRIPTION OF THE DRAWINGS

Embodiments of the present invention will now be described, by way of example only, with reference to the accompanying drawings, in which:-
Fig. 1 is a schematic diagram of a video signal,
Fig. 2 is a view of an image frame,
Fig. 3 is a further view of the image frame of Fig. 2, with the predicted light source color displayed around the frame, for comparison,
Figs. 4 and 5 are diagrams of color space,
Fig. 6 is a schematic diagram of a series of image frames,
Fig. 7 is a flowchart of a method of processing the signal, and
Fig. 8 is a schematic diagram of a system for processing the signal.

### DETAILED DESCRIPTION OF THE EMBODIMENTS

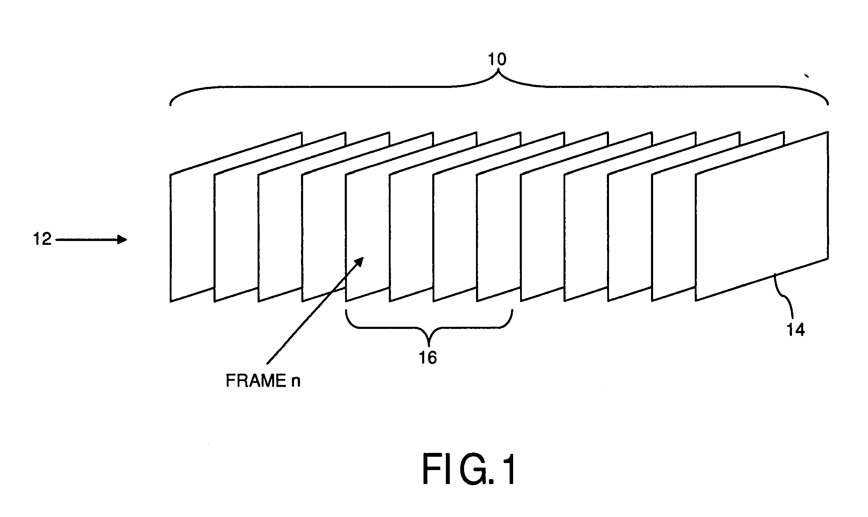

Fig. 1 shows an image signal 10, which comprises a series 12 of frames 14. The image signal 10 is a video signal, for example used in a television broadcast environment with twenty five frames 14 every second of the signal 10. Disclosed below is a method of processing the signal 10 which will detect flashes of light within the signal 10. Such flashes may be caused, for example by an explosion or a match being struck within the content captured within the frames 14. The detection of flashes of light is useful because many known techniques such as shot detection and color detection are affected by the presence of light flashes, and will return false results if flash detection is not carried out successfully. A nominal flash within the series 12 is shown by the reference numeral 16. This flash 16 begins at frame n, and lasts for m frames. In this case m equals four.

In order to detect the presence of a flash of light within a sequence 12 of frames 14, then light source estimation for each frame 14 needs to be carried out. Therefore, when detecting flashes within the sequence 12, there is a need to determine the light source entering a scene. For this step in the process it is possible to use a known technique, principal component analysis (PCA). An example of the details of PCA can be found in "Multivariate Analysis" by K.V. Mardia, J.T. Kent, and J.M. Bibby (Academic Press, London, 1979). To illustrate the concept, a short introduction will be given as background information.

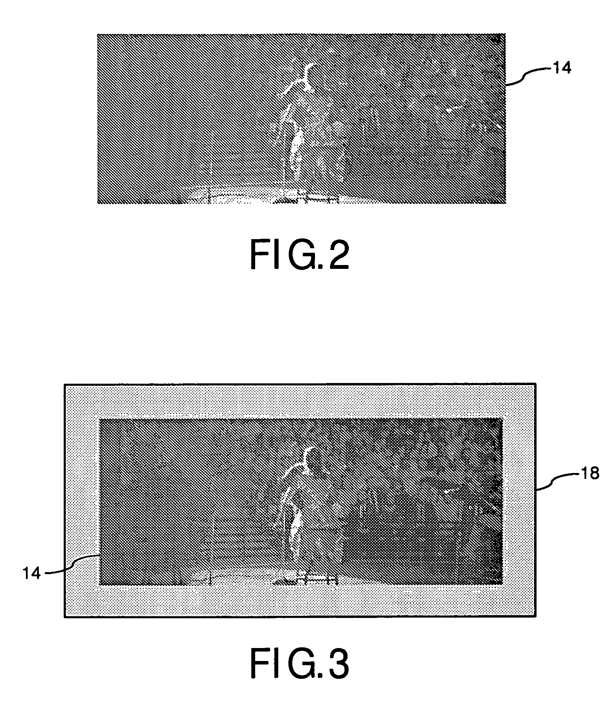

Fig. 2 shows an example of an image frame 14. The idea behind the light estimation procedure that is used, is that light entering an image will be reflected on the white parts of the image. All the pixels in the image will be colored in the color of the light source, according to the luminance. Considering all the pixels in the image frame 14, and looking at them in a 3-dimensional cube in a (linear) RGB space, there is produced a 3-dimensional space with the pixels located therein. RGB values of a decoded video stream are gamma corrected values, which are not linear. In order to estimate linear light, the values are first transformed to linear RGB. Details of gamma correction can be found in "Digital Video and HDTV", by Charles Poynton.

The PCA algorithm mentioned above uses this data and does the following transformation: starting from the average values as a point of origin, the axes are transformed into three new axes in such a way that the first axis (the principal component) is responsible for most of the variation in the set of pixels. It is also possible to regard the principal axis as the result of least squares estimation. The final step is to estimate the point on the principal axis that corresponds to the actual light source. This can be done by projecting the pixels on the principal axis and checking where the contribution is significant (i.e. avoid taking a single pixel because it might be there because of encoding).

The result for the image frame 14 is shown in Fig. 3, with the light source 18 shown as a band around the frame 14. Note that the light source itself is not visible in the image. Also note that this can be done for parts of an image frame 14 as well, to find light sources for a region of interest. In case there is no light source available, the algorithm will yield one of the most dominant colors of the image, which is very reasonable. Since Figs. 2 and 3 are unfortunately rendered in black and white, it should be explained that the light source, which is a spotlight illuminating a performer on a stage, is bluish color, and this is the color that has been determined by the process of performing light source 18 detection on the frame 14. This process of determining the light source 18 is carried out for each frame 14 within the series 12 that makes up the signal 10.

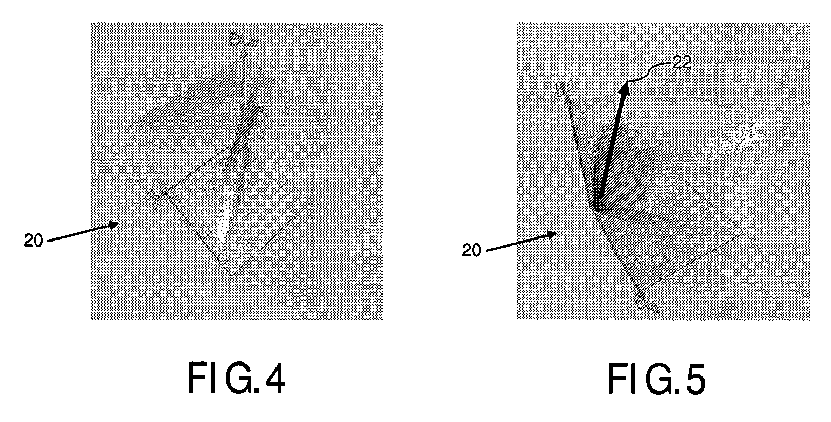

Figs. 4 and 5 show the representation of the color space 20 of the pixels within the frame 14 of Figs. 2 and 3. This information is used to calculate the light source within a frame. Firstly, the PCA transformation is carried out. Once this transformation has been executed then in the color space 20 of Fig. 5, a 3-dimensional vector 22 is shown, which is a calculation of the principal component within the image frame 14. The output of the PCA algorithm (the vector 22) is a stable result, for the pixels within the frame 14. This vector 22 is used as a way of calculating the light source 18 within the frame 14. In one embodiment, the detected light source within the frame 14 is a point in the 3-dimensional color space 20. The point is determined to be where the vector 22 leaves the space defined by the cluster of pixels within the frame 14, or could be the last pixel in the cluster that is either on the vector 22 or closest to the vector 22 (within a predefined boundary) at the furthest point from the origin of the vector. The determined light source could also be a direction from the origin, or from the average value of the pixels in the frame 14, to the point determined as above.

Once the determination of the light source has been made for a frame 14, then the flash detection can be carried out. Flash detection is executed based upon the results of the light source estimation. The PCA algorithm, discussed above, gives very stable results for, the average RGB values of the frame, the (normalized to length 1) direction of the principal component, and the contribution to the variance of the principal component compared to the other 2 axes. Moreover, the estimation of the actual light source gives information about the actual RGB value of the light source.

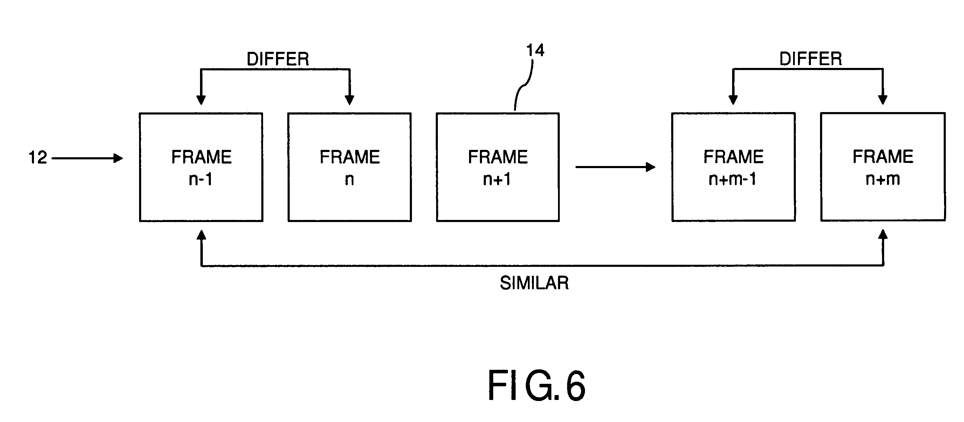

An example sequence 12 of frames 14 is shown in Fig. 6. Considering this sequence 12 of frames 14, by comparing the differences between the frames in a sequence, it is possible to detect a flash at frame n of length m as follows, if the following criteria are satisfied:
- the light sources of frame n-1 and frame n differ significantly,
- the light sources of frame n+m-1 and frame n+m differ significantly, and
- the light source of frames n-1 and frame n+m are very similar.

These three criteria are indicated in the Fig. 6, by the arrows indicating which frames 14 are compared together, and whether the detected light sources in the respective frames should differ or be similar. In a sequence of frames, an example of the values ofn and m could be n=20, and m=3. This means that a flash is detected at frame 20, which lasts for 3 frames. Frames 19 and 20 have light sources that differ significantly. Frames 22 and 23 have light sources that differ significantly, and frames 19 and 23 have light sources that are similar. The frames that make up the flash, being frames 20, 21 and 22 do not necessarily have light sources that are similar, depending upon whether the flash increases during the frames, or remains constant.

In order to quantify the relative concepts of "difference" and "similarity", two different thresholds are applied to the measured light sources to determine via an algorithm, whether the defined criteria have been met. The difference between the detected light source in frame n-1 and frame n must be above a first predetermined threshold and similarly, the difference between the detected light source in frame n+m-1 and frame n+m must also be above the first predetermined threshold. The difference between the detected light source in frame n-1 and frame n+m must be below a second predetermined threshold.

Using the information from the PCA algorithm, it is possible to easily defme distance measures between light sources, for example Euclidian distances between the RGB values and angles between the directions of axes. Thresholds are used to indicate if a change is significant or not. The detected light source of a frame comprises a point in color space.

The table below illustrates a series of values for three consecutive frame:

| | Frame 1 | Frame 2 | Frame 3 |
|---|---|---|---|
| R | 188.725 | 128.333 | 188.725 |
| G | 214.344 | 170.598 | 213.744 |
| B | 246.433 | 253.512 | 246.433 |
| R_average | 10.5688 | 10.9377 | 10.5992 |
| G_average | 11.1165 | 16.5005 | 11.136 |
| B_average | 12.3426 | 34.6146 | 12.3383 |
| R_direction | 0.418112 | 0.229523 | 0.419208 |
| G_direction | 0.544304 | 0.400895 | 0.542856 |
| B_direction | 0.727266 | 0.886906 | 0.727717 |

In this table, the middle three rows give the average values of the pixels within each frame. As can be seen, on a scale of 0 to 255, these values tend towards black, as is common in many films, as a significant number of frames are predominantly black. A small element of bright color within a frame that is predominantly black will not affect the average values very much. However, once the PCA algorithm has been used to produce the principal vector (of the type shown as the vector 22 in Fig. 5), then the light source determination (which, in one embodiment, is a point on the vector) is represented by the top three lines of the table, which gives the RGB values for the detected light source. As described above, this value is the point on the PCA vector, as that vector exits the "cloud" of pixels in the 3-dimensional space representing the pixels in the frame. The angles, in the bottom three rows, are those made by a direction from the average RGB values to the RGB point in space of the top three rows.

The table above gives the values from light source detection for the three frames. The estimated light source changes from some gray/bluish value (R=188, G=214, B=246) to a clear blue value (R=128, G=170, B=253) and back again. Also the average colors of the frame change. Similarly, also the direction changes significantly, the angle between (R_dir=0.41, G_dir=0.54, B_dir=0.72) to (0.22, 0.40, 0.88) being about 19 degrees. So the change in angle is obvious, and it is also clear that the angle between the first and third frame is minimal. In this case a flash will be detecting with n=2 and m=1, being a flash that starts at frame 2 (the n value) and lasts for just one frame (the m value).

Moreover, it is advantageous that there should be a limit for how long the flash could last, say up to a few frames. This is implemented by suppressing the detection of the flash, if the value m, the length in frames of the detected flash, is above a predetermined number. This prevents detection of false flashes.

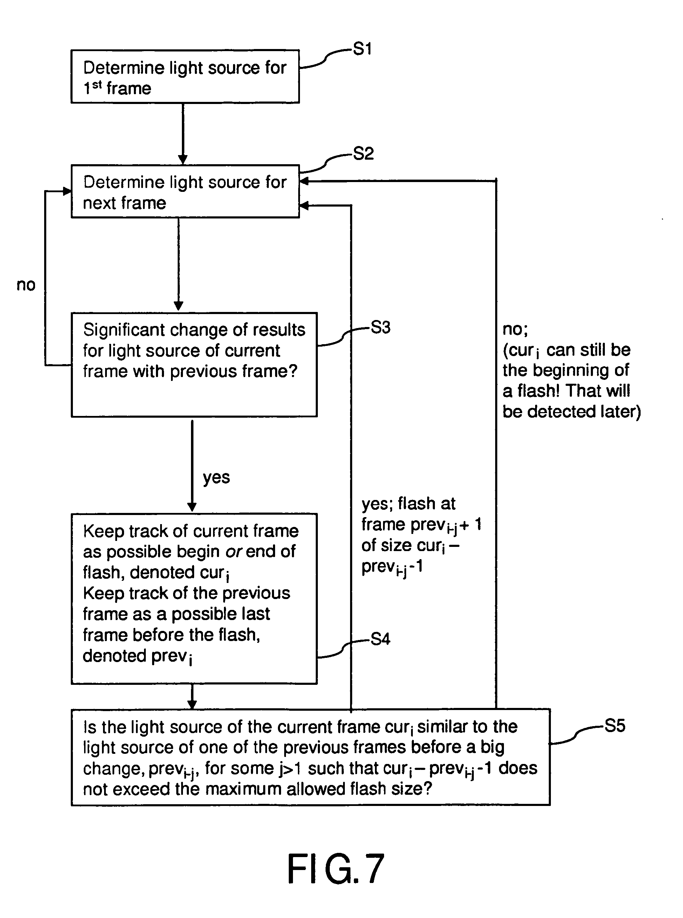

Fig. 7 summarizes one implementation of a method of processing the signal 10, in order to detect a flash within frames 14 of the signal 10. It should be understood that the methodology is configured so that the end of a flash is detected, and the method is looking back through the previous frames 14 to find the start of a flash. To assist in this end the process includes maintaining a look-up table of frames n, where the difference between the detected light source in frame n-1 and frame n is above the first predetermined threshold.

In the flowchart, the first step is to detect the light source for a first frame, at step S1. The process then cycles through the steps S2 and S3 continually. At step S2 detection of the light source in the next frame is accomplished. As step S3, the values for the light sources of the present frame and the immediately previous frame are compared. If there is no significant difference between the two values, then the process returns to step S2. If however, a significant difference in the two values is detected, then the process moves to step S4. At step S4, the current frame number is stored in a look-up table, as a potential beginning or end of a flash. The process then moves on to step S5, where a comparison is made based upon the previous frames that are stored in the look-up table. The light source of the current frame is compared to light sources in those frames that immediately precede the frames stored in the look-up table to see if the difference between them is below the second threshold (similarity). If yes then a flash is detected, if no then none is detected, and the process continues cycling through the frames 14.

The flash detection can be used for several processes. For example, it can be used to improve shot cut detection. Strong flashes can be regarded as shot cuts. With flash detection these false shot cuts can be eliminated. The process can also be used to improve dominant colors that represent an interval of frames. Especially when there are relatively many flashes in the interval, or when subsampling is used, the influence of a flash on the average colors can change significantly. By avoiding the frames that belong to the flashes, it is possible to give a very precise description of the general colors of the specific interval. In addition, the detected flash itself can be used to generate light effects at the specific instances, for example at an explosion the room can light up in the perfect color. As mentioned above, these applications are applications that improve the quality of content analysis results for applications such as amBX scripting. Any application that uses light source or color information in video can benefit from it.

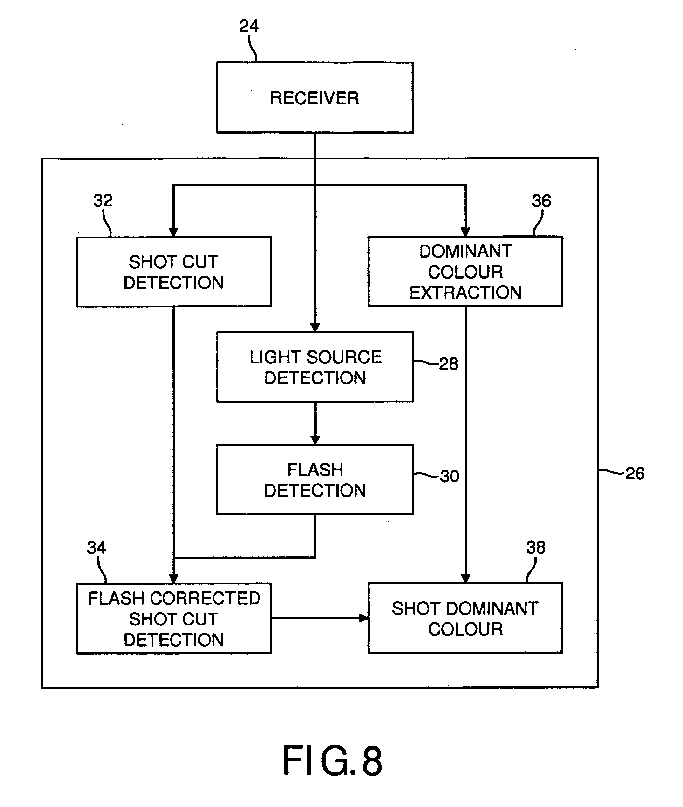

A system for processing the image signal 10 is shown in Fig. 8, the system comprises a receiver 24, which is arranged to receive the image signal 10 comprising the series 12 of frames 14 and a processor 26. The processor includes a light source color detection component 28 arranged to perform light source color detection on each frame 14, and a flash detection component 30 arranged to detect a flash at frame n of length m frames when the necessary criteria are satisfied. As detailed above, this occurs when the difference between the detected light source color in frame n-1 and frame n is above a first predetermined threshold, the difference between the detected light source color in frame n+m-1 and frame n+m is above the first predetermined threshold, and the difference between the detected light source color in frame n-1 and frame n+m is below a second predetermined threshold.

In addition to the flash detection performed by the processor 26, the video signal 12 is also analyzed at component 32 and shot cuts are detected. At the same time, the frames 14 are analyzed for the light source, and frames 14 are also analyzed for the dominant colors. The results for the light source detection are used to detect flashes, and the flashes are used to remove falsely identified shot cuts at component 34. Finally, for each shot the processor 26 is arranged to determine the overall dominant colors, at component 36 using the dominant colors for all (or a subsampled set) of the frames in the shot. A component 38 can be used to determine the dominant colors in the shot, using the information from the component 34. The flash detection itself immediately gives the color of the flashes.

The system of detecting flashes in video sequences described above is a significant improvement over the prior art. It is a robust and efficient system that is able to detect flashes that last more than a single frame, and is not affected by motion within the frame over the time of the flash. Indeed if the actual source of the light is moving within the frames, then the process will still operate correctly. Even if the light source is weak, the direction will change significantly. This can be measured by the angles between the principal components of the two frames. The process looks at the light source rather than at the frame difference. The light source will not change because of motion or movement of objects within the frames.

## Claims

1. A method of processing an image signal (10) comprising:
- receiving an image signal (10) comprising a series (12) of frames (14),
- performing light source color detection on each frame (14), and
- detecting a flash (16) at frame n of length m frames when the following criteria are satisfied:
- the difference between the detected light source color in frame n-1 and frame n is above a first predetermined threshold,
- the difference between the detected light source color in frame n+m-1 and frame n+m is above the first predetermined threshold, and
- the difference between the detected light source color in frame n-1 and frame n+m is below a second predetermined threshold.

2. A method according to claim 1, wherein the detected light source color of a frame (14) comprises a point in color space (20).

3. A method according to claim 1 or 2, and further comprising maintaining a look-up table of frames n, where the difference between the detected light source color in frame n-1 and frame n is above the first predetermined threshold.

4. A method according to claim 1, 2 or 3, and further comprising suppressing the detection of the flash (16), if the value m, the length in frames (14) of the detected flash (16), is above a predetermined number.

5. A system for processing an image signal (10) comprising:
- a receiver (24) arranged to receive an image signal (10) comprising a series (12) of frames (14), and
- a processor (26) arranged to perform light source color detection on each frame (14), and to detect a flash (16) at frame n of length m frames when the following criteria are satisfied:
- the difference between the detected light source color in frame n-1 and frame n is above a first predetermined threshold,
- the difference between the detected light source color in frame n+m-1 and frame n+m is above the first predetermined threshold, and
- the difference between the detected light source color in frame n-1 and frame n+m is below a second predetermined threshold.

6. A system according to claim 5, wherein the detected light source color of a frame (14) comprises a point in color space (20).

7. A system according to claim 5 or 6, wherein the processor (26) is further arranged to maintain a look-up table of frames n, where the difference between the detected light source color in frame n-1 and frame n is above the first predetermined threshold.

8. A system according to claim 5, 6 or 7, wherein the processor (26) is further arranged to suppress the detection of the flash (16), if the value m, the length in frames (14) of the detected flash (16), is above a predetermined number.

9. A computer program product on a computer readable medium for processing an image signal (10), the product comprising instructions for:
- receiving an image signal (10) comprising a series (12) of frames (14),
- performing light source color detection on each frame (14), and
- detecting a flash (16) at frame n of length m frames when the following criteria are satisfied:
- the difference between the detected light source color in frame n-1 and frame n is above a first predetermined threshold,
- the difference between the detected light source color in frame n+m-1 and frame n+m is above the first predetermined threshold, and
- the difference between the detected light source color in frame n-1 and frame n+m is below a second predetermined threshold.

10. A computer program product according to claim 9, wherein the detected light source color of a frame (14) comprises a point in color space (20).

11. A computer program product according to claim 9 or 10, and further comprising instructions for maintaining a look-up table of frames n, where the difference between the detected light source color in frame n-1 and frame n is above the first predetermined threshold.

12. A computer program product according to claim 9, 10 or 11, and further comprising instructions for suppressing the detection of the flash (16), if the value m, the length in frames (14) of the detected flash (16), is above a predetermined number.

## Patentansprüche

1. Verfahren zum Verarbeiten eines Bildsignals (10), wobei dieses Verfahren Folgendes umfasst:
- das Empfangen eines Bildsignals (10) mit einer Reihe (12) von Frames (14),
- das Durchführen einer Lichtquellenfarbdetektion in jedem Frame (14), und
- das Detektieren eines Flashes (16) in Frame n mit einer Länge von m Frames, wenn die nachfolgenden Kriterien erfüllt werden:
- die Differenz zwischen der detektierten Lichtquellenfarbe in Frame n-1 und Frame n liegt über einer ersten vorbestimmten Schwelle,
- die Differenz zwischen der detektierten Lichtquellenfarbe in Frame n+m-1 und Frame n+m liegt über der ersten vorbestimmten Schwelle, und
- die Differenz zwischen der detektierten Lichtquellenfarbe in Frame n-1 und Frame n+m liegt unter einer zweiten vorbestimmten Schwelle.

2. Verfahren nach Anspruch 1, wobei die detektierte Lichtquellenfarbe eines Frames (14) einen Punkt im Farbraum (20) enthält.

3. Verfahren nach Anspruch 1 oder 2, das weiterhin Folgendes umfasst: das Einhalten einer Nachschlagtabelle von Frames n, wobei die Differenz zwischen der detektierten Lichtquellenfarbe in Frame n-1 und Frame n über der ersten vorbestimmten Schwelle liegt.

4. Verfahren nach Anspruch 1, 2 oder 3, das weiterhin Folgendes umfasst: das Unterdrücken der Detektion des Flashes (16), wenn der Wert m, die Länge in Frames (14) des detektierten Flashes (16), größer ist als eine vorbestimmte Zahl.

5. System zum Verarbeiten eines Bildsignals (10), wobei das System Folgendes umfasst:
- einen Empfänger (24) zum Empfangen eines Bildsignals (10) mit einer Reihe (12) von Frames (14), und
- einen Prozessor (26) zum Durchführen einer Lichtquellenfarbdetektion in jedem Frame (14), und zum Detektieren eines Flashes (16) in Frame n mit einer Länge von m Frames, wenn die nachfolgenden Kriterien erfüllt werden:
- die Differenz zwischen der detektierten Lichtquellenfarbe in Frame n-1 und Frame n liegt über einer ersten vorbestimmten Schwelle,
- die Differenz zwischen der detektierten Lichtquellenfarbe in Frame n+m-1 und Frame n+m liegt über der ersten vorbestimmten Schwelle, und
- die Differenz zwischen der detektierten Lichtquellenfarbe in Frame n-1 und Frame n+m liegt unter einer zweiten vorbestimmten Schwelle.

6. System nach Anspruch 5, wobei die detektierte Lichtquellenfarbe eines Frames (14) einen Punkt im Farbraum (20) enthält.

7. System nach Anspruch 5 oder 6, wobei der Prozessor (26) weiterhin zum Einhalten einer Nachschlagtabelle von Frames n vorgesehen ist, wobei die Differenz zwischen der detektierten Lichtquellenfarbe in Frame n-1 und Frame n über der ersten vorbestimmten Schwelle liegt.

8. System nach Anspruch 5, 6 oder 7, wobei der Prozessor (26) weiterhin zum Unterdrücken der Detektion des Flashes (16) vorgesehen ist, wenn der Wert m, die Länge in Frames (14) des detektierten Flashes (16), größer ist als eine vorbestimmte Zahl.

9. Computerprogrammprodukt auf einem vom Computer auslesbaren Medium zum Verarbeiten eines Bildsignals (10) wobei das Produkt Instruktionen enthält, und zwar
- zum Empfangen eines Bildsignals (10) mit einer Reihe (12) von Frames (14),
- zum Durchführen einer Lichtquellenfarbdetektion in jedem Frame (14), und
- zum Detektieren eines Flashes (16) in Frame n mit einer Länge von m Frames, wenn die nachfolgenden Kriterien erfüllt werden:
- die Differenz zwischen der detektierten Lichtquellenfarbe in Frame n-1 und Frame n liegt über einer ersten vorbestimmten Schwelle,
- die Differenz zwischen der detektierten Lichtquellenfarbe in Frame n+m-1 und Frame n+m liegt über der ersten vorbestimmten Schwelle, und
- die Differenz zwischen der detektierten Lichtquellenfarbe in Frame n-1 und Frame n+m liegt unter einer zweiten vorbestimmten Schwelle.

10. Computerprogrammprodukt nach Anspruch 9, wobei die detektierte Lichtquellenfarbe eines Frames (14) einen Punkt in dem Farbraum (20) aufweist.

11. Computerprogrammprodukt nach Anspruch 9 oder 10, weiterhin mit Instruktionen zum Einhalten einer Nachschlagtabelle von Frames n, wobei die Differenz zwischen der detektierten Lichtquellenfarbe in Frame n-1 und Frame n über der ersten vorbestimmten Schwelle liegt.

12. Computerprogrammprodukt nach Anspruch 9, 10 oder 11, weiterhin mit Instruktionen zum Unterdrücken der Detektion des Flashes (16), wenn der Wert m, die Länge in Frames (14) des detektierten Flashes (16), größer ist als eine vorbestimmte Zahl.

## Revendications

1. Procédé de traitement d'un signal d'image (10) comprenant :
- la réception d'un signal d'image (10) comprenant une série (12) de trames (14),
- l'exécution d'une détection de la couleur de la source de lumière sur chaque trame (14), et
- la détection d'un flash (16) à la trame n des trames m de longueur lorsque les conditions suivantes sont remplies :
- la différence entre la couleur détectée de la source de lumière dans la trame n-1 et la trame n se situe au-dessus d'un premier seuil prédéterminé,
- la différence entre la couleur détectée de la source de lumière dans la trame n+m-1 et la trame n+m se situe au-dessus du premier seuil prédéterminé, et
- la différence entre la couleur détectée de la source de lumière dans la trame n-1 et la trame n+m se situe au-dessous d'un deuxième seuil prédéterminé.

2. Procédé selon la revendication 1, dans lequel la couleur détectée de la source de lumière d'une trame (14) comprend un point dans l'espace de couleur (20).

3. Procédé selon la revendication 1 ou selon la revendication 2, et comprenant en outre le maintien d'une table de consultation des trames n où la différence entre la couleur détectée de la source de lumière dans la trame n-1 et la trame n se situe au-dessus du premier seuil prédéterminé.

4. Procédé selon les revendications précédentes 1, 2 ou 3, et comprenant en outre la suppression de la détection du flash (16) si la valeur m, la longueur dans les trames (14) du flash détecté (16), est supérieure à un nombre prédéterminé.

5. Système de traitement d'un signal d'image (10) comprenant :
- un récepteur (24) qui est agencé de manière à recevoir un signal d'image (10) comprenant une série (12) de trames (14), et
- un processeur (26) qui est agencé de manière à exécuter une détection de la couleur de la source de lumière sur chaque trame (14) et à détecter un flash (16) à la trame n des trames n de longueur lorsque les conditions suivantes sont remplies :
- la différence entre la couleur détectée de la source de lumière dans la trame n-1 et la trame n se situe au-dessus d'un premier seuil prédéterminé,
- la différence entre la couleur détectée de la source de lumière dans la trame n+m-1 et la trame n+m se situe au-dessus du premier seuil prédéterminé, et
- la différence entre la couleur détectée de la source de lumière dans la trame n-1 et la trame n+m se situe au-dessous d'un deuxième seuil prédéterminé.

6. Système selon la revendication 5, dans lequel la couleur détectée de la source de lumière d'une trame (14) comprend un point dans l'espace de couleur (20).

7. Système selon la revendication 5 ou selon la revendication 6, dans lequel le processeur (26) est en outre agencé de manière à maintenir une table de consultation des trames n où la différence entre la couleur détectée de la source de lumière dans la trame n-1 et la trame n se situe au-dessus du premier seuil prédéterminé.

8. Système selon les revendications précédentes 5, 6 ou 7, dans lequel le processeur (26) est en outre agencé de manière à supprimer la détection du flash (16) si la valeur m, la longueur dans les trames (14) du flash détecté (16), est supérieure à un nombre prédéterminé.

9. Produit de programme informatique sur un support lisible par ordinateur pour traiter un signal d'image (10), le produit comprenant des instructions pour :
- la réception d'un signal d'image (10) comprenant une série (12) de trames (14),
- l'exécution d'une détection de la couleur de la source de lumière sur chaque trame (14), et
- la détection d'un flash (16) à la trame n des trames m de longueur lorsque les conditions suivantes sont remplies :
- la différence entre la couleur détectée de la source de lumière dans la trame n-1 et la trame n se situe au-dessus d'un premier seuil prédéterminé,
- la différence entre la couleur détectée de la source de lumière dans la trame n+m-1 et la trame n+m se situe au-dessus du premier seuil prédéterminé, et
- la différence entre la couleur détectée de la source de lumière dans la trame n-1 et la trame n+m se situe au-dessous d'un deuxième seuil prédéterminé.

10. Produit de programme informatique selon la revendication 9, dans lequel la couleur détectée de la source de lumière d'une trame (14) comprend un point dans l'espace de couleur (20).

11. Produit de programme informatique selon la revendication 9 ou selon la revendication 10, et comprenant en outre des instructions pour le maintien d'une table de consultation des trames n où la différence entre la couleur détectée de la source de lumière dans la trame n-1 et la trame n se situe au-dessus du premier seuil prédéterminé.

12. Produit de programme informatique selon les revendications précédentes 9, 10 ou 11, et comprenant en outre des instructions pour la suppression de la détection du flash (16) si la valeur m, la longueur dans les trames (14) du flash détecté (16), est supérieure à un nombre prédéterminé.
